Europäisches Patentamt

European Patent Office

Office européen des brevets

(19)

(11) Publication number: 0 474 963 A2

# EUROPEAN PATENT APPLICATION

(12)

(21) Application number: 91106249.5

(22) Date of filing: 18.04.91

(51) Int. Cl.⁵: G06F 1/32

(30) Priority: 13.09.90 JP 241082/90
27.09.90 JP 255069/90
11.04.91 JP 78927/91

(43) Date of publication of application:
18.03.92 Bulletin 92/12

(84) Designated Contracting States:
DE FR GB

(71) Applicant: Kabushiki Kaisha Toshiba
72, Horikawa-cho Saiwai-ku
Kawasaki-shi(JP)

(72) Inventor: Yamaki, Kazunori, c/o Intellectual

Property Div.
Kabushiki Kaisha Toshiba, 1-1 Shibaura
1-chome
Minato-ku, Tokyo 105(JP)
Inventor: Nishikawa, Hirofumi, c/o Intellectual
Property Div
Kabushiki Kaisha Toshiba, 1-1 Shibaura
1-chome
Minato-ku, Tokyo 105(JP)

(74) Representative: Henkel, Feiler, Hänzel &
Partner
Möhlstrasse 37
W-8000 München 80(DE)

(54) Computer system having sleep mode function.

(57) A personal computer having a sleep mode function for reducing power consumption by lowering the frequency of a clock pulse to be supplied to a CPU includes a clock control circuit (18) for generating a high-frequency first clock pulse, and a low-frequency second clock pulse. When a power supply is turned on, an initial program loader (IPL) discriminates whether or not an AC adapter (105) is connected. The computer also includes a sleep mode controller (16) for, when the AC adapter is connected, disabling a signal, to be supplied to the clock control circuit, for instructing generation of the second clock pulse.

F I G. 1

The present invention relates to a personal computer and, more particularly, to a computer system having a sleep mode function of decreasing a processing speed of a CPU to save power of the system (i.e., to reduce power consumption).

In recent years, a lap-top type personal computer which employs a battery (rechargeable internal battery) as a power supply for a computer system has been developed. Such a computer must have some means for saving power since continuous use of its power supply is limited.

For the purpose of saving power of the power supply, a so-called sleep mode function of decreasing a processing speed of a CPU (microprocessor) under a predetermined condition is known. When no input/output (I/O) operation is performed, the CPU does not require a normal processing speed (relatively high speed), and the processing speed of the CPU can be decreased. The processing speed of the CPU is determined by the frequency of a clock pulse. For this reason, the sleep mode function switches a high-frequency clock pulse normally supplied to the CPU to a low-frequency clock pulse, and supplies it to the CPU.

When the following conditions are satisfied, the sleep mode function is started upon execution of a HALT instruction by a basic input and output system (BIOS).

(1) Although a keyboard control routine of the BIOS is executed, no key input data is set in a key buffer.

(2) No key input data is set in the key buffer, and the CPU is in an idle state.

On the other hand, the sleep mode function is released when an external interrupt, e.g., a timer interrupt occurs, or when the CPU is reset. Once the sleep mode function is released, it will not be enabled unless the BIOS executes a HALT instruction again.

In order to enable the sleep mode function, the BIOS must execute a HALT instruction under the above-mentioned conditions. When the sleep mode function is permitted to be enabled, the BIOS must always monitor whether the above-mentioned conditions are satisfied. More specifically, time is undesirably wasted for processing which is not associated with actual execution of a program.

When the sleep mode function is enabled, and when it is released in response to an interrupt (e.g., a timer interrupt for monitoring a status of the system) or resetting of the CPU, the low-frequency clock (e.g., 4 MHz) must be restored to the high-frequency clock (32 MHz). This operation requires a plurality of cycles, and time is wasted for processing which is not associated with actual execution of the program, as described above.

As described above, the sleep mode function is set to prolong a battery driving time by reducing power consumption. Therefore, when the computer receives an external power supply, e.g., when an AC adapter is connected to the computer, a power supply from the AC adapter has priority over a power supply from the battery. Therefore, the sleep mode function need not be enabled.

However, the sleep mode function of a conventional battery driven personal computer is enabled as long as the conditions are satisfied even when the computer is operated by a mounted battery, and when it receives an external power supply, e.g., when it is operated by an externally connected AC adapter or when it receives power from a master station which can be connected to the battery driven personal computer. Therefore, the processing speed of a program is decreased, and performance of the personal computer cannot be fully exhibited.

It is an object of the present invention to provide a personal computer which can disable a sleep mode function when the personal computer which is battery driven is operated by externally supplied power, and can fully exhibit its performance.

In order to achieve the above object, according to the present invention, a computer system having a sleep mode function, comprises: processor means for performing various data processing operations; clock control means for selecting one of a first clock pulse at a predetermined high frequency required in a normal mode of the processor means, and a second clock pulse at a predetermined low frequency required in a sleep mode of the processor means, and supplying the selected clock pulse to the processor means; discrimination means for discriminating whether or not the computer system receives an external power supply; and sleep operation control means for, when the discrimination means discriminates that the computer system receives an external power supply, prohibiting the clock control means to supply the second clock pulse to the processor means.

According to the present invention, the computer can automatically recognize that power is externally supplied, and can automatically disable the sleep mode function. As a result, a personal computer having a sleep mode function, which can fully exhibit its performance can be provided.

This invention can be more fully understood from the following detailed description when taken in conjunction with the accompanying drawings, in which:

Fig. 1 is a block diagram showing a personal computer having a sleep mode function according to an embodiment of the present invention;

Fig. 2 is a detailed circuit diagram of a sleep mode controller shown in Fig. 1;

Fig. 3 is a detailed circuit diagram of a logic circuit shown in Fig. 1;

Fig. 4 is a detailed circuit diagram of a clock control circuit shown in Fig. 1;

Fig. 5 is a detailed circuit diagram of a circuit for discriminating connection of an AC adapter; and

Figs. 6A and 6B are flow charts showing an operation of the embodiment shown in Fig. 1.

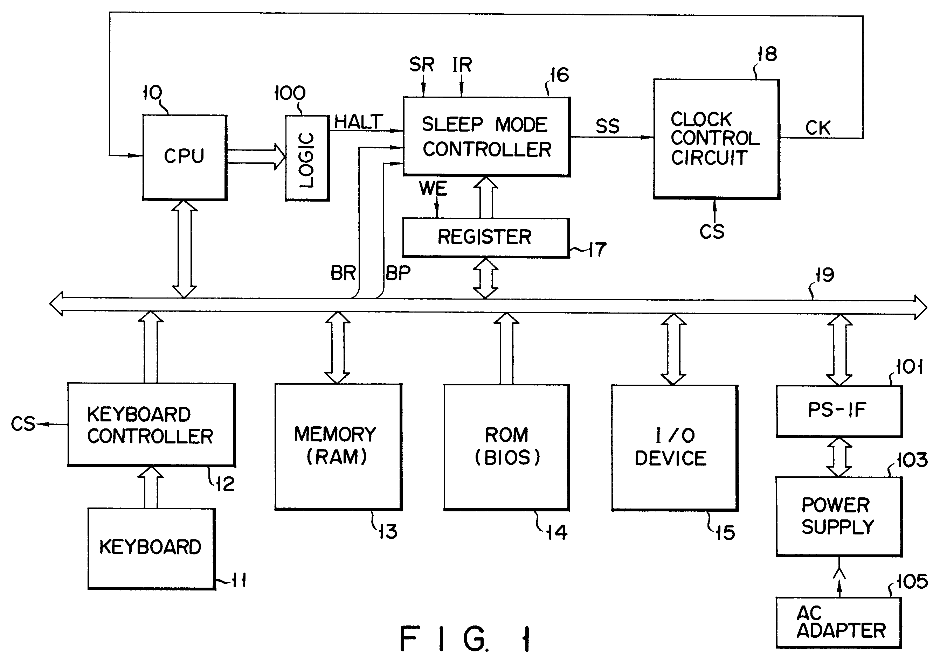

Fig. 1 is a block diagram showing a personal computer having a sleep mode function according to an embodiment of the present invention. The personal computer shown in Fig. 1 is a lap-top type personal computer which can be operated by a rechargeable battery. As shown in Fig. 1, this system comprises a microprocessor 10 constituting a central processing unit (CPU), a keyboard 11, a keyboard controller (KBC) 12, a memory 13, a read only memory (ROM) 14 for storing a basic input and output system (BIOS), an I/O device 15, and a power supply 103 connected to a system bus 19 via a power supply control interface (PS-IF) 101.

The keyboard 11 and the KBC 12 constitute an input device for inputting data upon various key operations on the keyboard 11. The memory 13 comprising a random access memory (RAM) constitutes various registers such as key buffers for storing data inputted from the keyboard 11. As described above, the ROM 14 stores the BIOS for performing an I/O control operation. The I/O device 15 is an external storage device such as a floppy disk drive.

The system further comprises a sleep mode controller 16 and a control register 17. The sleep mode controller 16 discriminates based on a command outputted from, e.g., the CPU 10 whether or not predetermined conditions for executing a sleep mode are satisfied. If the predetermined conditions are satisfied, the sleep mode controller 16 outputs a control signal SS to a clock control circuit 18. The control register 17 stores mode control data for enabling or disabling execution of a control operation of the sleep mode controller 16.

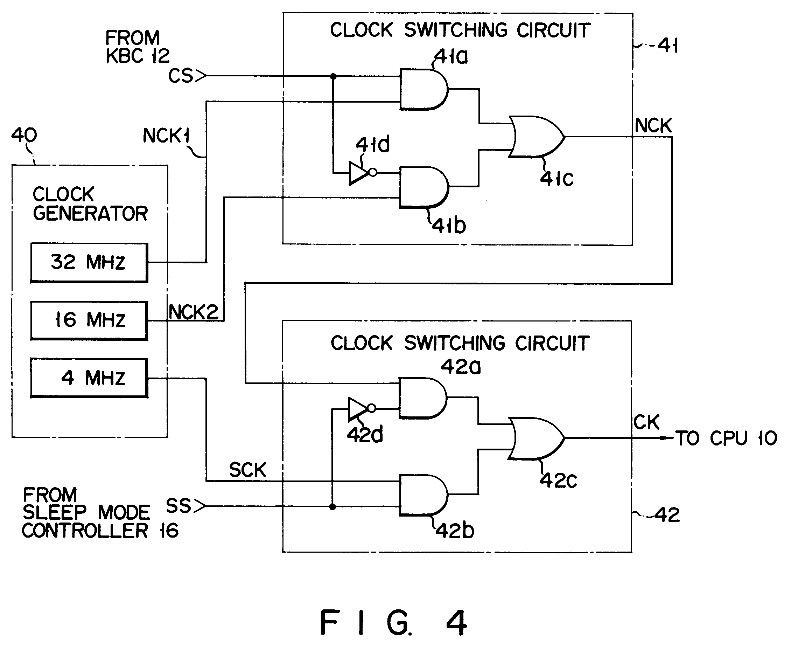

The clock control circuit 18 generates a clock pulse CK for determining a processing speed of the CPU 10, as shown in Fig. 4. A clock generator 40 generates clock pulses NCK1 and NCK2 necessary for a normal operation (high-speed processing) of the CPU 10, and a low-frequency (e.g., 4 MHz) clock pulse SCK necessary for the sleep mode. The clock pulse NCK1 is a high-frequency (e.g., 32 MHz) pulse, and the clock pulse NCK2 is a high-frequency (e.g., 16 MHz) pulse. The clock control circuit 18 comprises first and second clock switching circuits 41 and 42.

The first clock switching circuit 41 selects one of the clock pulses NCK1 and NCK2 on the basis of a clock switch signal CS outputted from the KBC 12, and outputs the selected pulse as a normal-mode clock pulse NCK. The first clock switching circuit 41 is constituted by a logic circuit comprising AND gates 41a and 41b, an OR gate 41c, and an inverter 41d. The second clock switching circuit 42 selects and outputs the clock pulse SCK in accordance with the clock switch signal SS from the sleep mode controller 16 in the sleep mode, and selects and outputs the clock pulse NCK from the first clock switching circuit 41 in the normal mode. The second clock switching circuit 42 is constituted by a logic circuit comprising AND gates 42a and 42b, an OR gate 42c, and an inverter 42d.

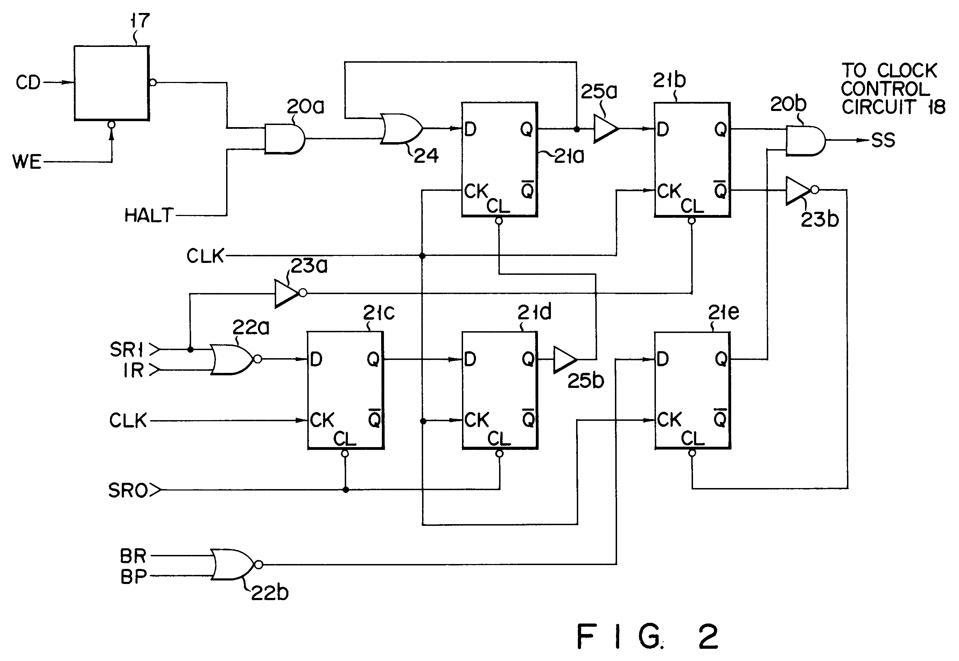

The sleep mode controller 16 has a circuit shown in Fig. 2. More specifically, the controller 16 is a logic circuit comprising AND gates 20a and 20b, flip-flops 21a through 21e, NAND gates 22a and 22b, inverters 23a and 23b, an OR gate 24, and buffer circuits 25a and 25b. The first input terminal of the AND gate 20a receives the mode control data CD stored in the control register 17, and the second input terminal thereof receives a HALT instruction from the CPU 10. When the HALT instruction is at logic level "H" (High), it becomes a significant signal. When the mode control data CD is at logic level "H", the sleep mode is disabled, and when it is at logic level "L" (low), the sleep mode is enabled. Therefore, when the mode control data CD at logic level "L" is stored in the control register 17, and the HALT instruction at logic level "H" is inputted, the AND gate 20a outputs a signal at logic level "H" to the OR gate 24. The control register 17 is set in a write enable state in response to a write enable signal WE generated by decoding an I/O address outputted from the CPU 10. The mode control data CD is set in the control register 17 by the CPU 10 on the basis of a content (whether the sleep mode is enabled or disabled) set in a setup menu or a pop-up menu by a user via the keyboard 11.

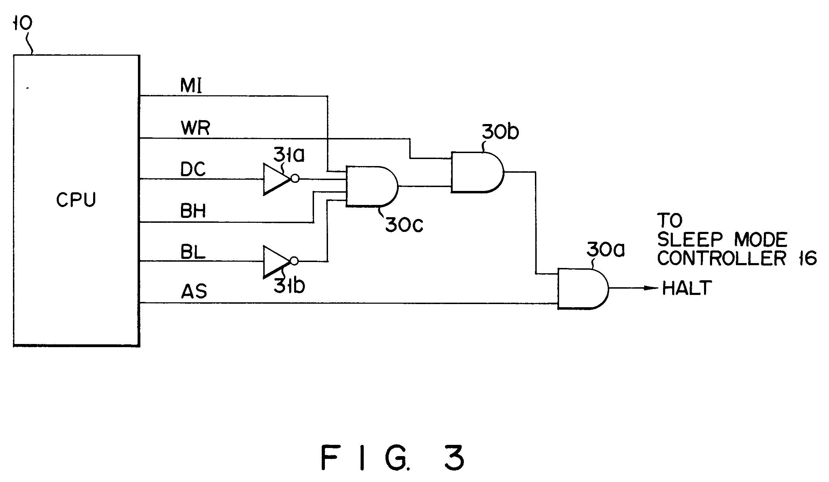

The first input terminal of the NAND gate 22a receives a system reset signal SR1, and the second input terminal thereof receives a sleep mode release signal (interrupt request) IR. The system reset signal SR1 is a reset signal (logic level "H") outputted from a gate array (not shown). The gate array generates the reset signal upon reception of a power ON/OFF signal from the power supply 103 or upon reception of a control signal from the keyboard 11. The release signal IR is a power OFF signal (power ON reset signal) outputted from the power supply 103, or an interrupt signal from an interrupt controller (not shown). The first input terminal of the NAND gate 22b receives, e.g., a signal BR outputted from a DMA controller (not shown) to request release of the system bus 19, and the second input terminal thereof receives a signal BP outputted from the CPU 10 to enable use of the system bus 19. The signals BR and BP which are significant at logic level "H" are generated when a file is to be accessed. For this reason, when a file is not accessed, the signals BR and BP are at logic level "L". The clock terminals of the flip-flops 21a through 21e receive a clock CLK from a clock generator (not shown). The AND gate 20b outputs the control signal SS as an output signal from the controller 16. When the mode control data CD is at logic level "L", the HALT instruction is at logic level "H", and the signals BR and BP are at logic level "L". As a result, the AND gate 20b outputs the "H"-level control signal SS which means to setting of the sleep mode. When one of the system reset signal SR1 and the release signal IR is at logic level "H", the sleep mode is released. When the "H"-level mode control data CD which means prohibition of the control operation of the sleep mode controller 16 is set in the control register 17, the sleep mode is released. In Fig. 2, the flip-flops 21c and 21d are arranged to synchronize the system reset signal SR1 and the interrupt signal IR with the HALT signal. More specifically, the system reset signal SR1 and the interrupt signal IR are generated at arbitrary timings. However, the HALT signal is generated by decoding the HALT instruction by the CPU upon an instruction from the BIOS. Therefore, the HALT signal and the system reset signal SR1 or the interrupt signal IR are synchronized with each other. Fig. 2 shows system result signals SR1 and SR0. The system reset signal SR0 is an inverted signal of SR1. More specifically, the system reset signal SR1 goes active at logic "1" ("H"), and the system reset signal SR0 goes active at logic "0" ("L"). The HALT instruction is generated by a status decode circuit shown in Fig. 3 (a logic circuit 100 shown in Fig. 1). This circuit comprises AND gates 30a through 30c, and inverters 31a and 31b. The CPU 10 outputs various status signals MI, WR, DC, BH, BL, and AS to the status decode circuit. The signal MI means memory access when it is at logic level "H"; and means I/O access when it is at logic level "L". The signal WR means a write mode when it is at logic level "H"; and means a read mode when it is at logic level "L". The signal DC means data when it is at logic level "H"; and means a command when it is a logic level "L". For example, when 16-bit data is to be accessed, the signal BH at logic level "H" means that an upper byte of data is enabled, and the signal BL at logic level "H" means that a lower byte of the data is enabled. When the signal AS is at logic level "H" it means that an address signal is correct. When the status decode circuit receives the "H"-level signal MI, the "H"-level signal WR, the "L"-level signal DC, the "H"-level signal BH, the "L"-level signal BL, and "H"-level signal AS, it causes the AND gate 30a to output the "H"-level HALT instruction.

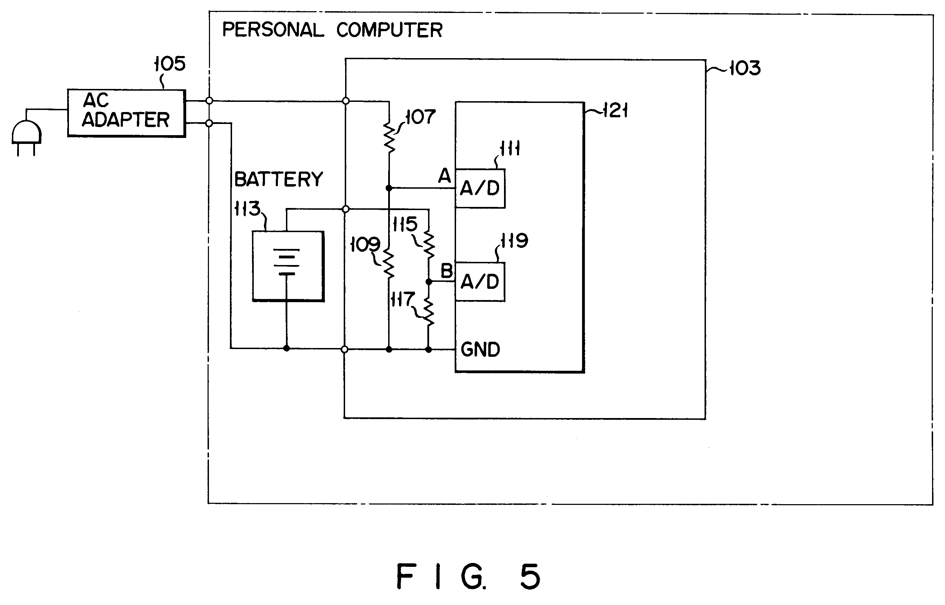

Fig. 5 is a circuit for discriminating that an AC adapter 105 is connected as an external power supply. An output voltage from the AC adapter 105 is voltage-divided by voltage-dividing resistors 107 and 109, and the divided voltage is supplied to the input terminal of a sub CPU 121 in the power supply 103. An analog divided voltage supplied to the input terminal A is converted into a digital value by an internal first A/D converter 111. An output voltage from a battery 113 is voltage-divided by voltage-dividing resistors 115 and 117, and the divided voltage is supplied to an input terminal B of the sub CPU 121. The sub CPU 121 has a ground terminal. One of the output terminals of the AC adapter 105 and the battery 113 is connected to the ground terminal via the voltage-dividing resistors, and the other output terminal is directly connected to the ground terminal. When the AC adapter 105 is connected, a voltage divided by the voltage-dividing resistors 107 and 109 is supplied to the terminal A, and is converted into a digital value by the A/D converter 111. Therefore, the sub CPU 121 reads an output value from the A/D converter 111 to detect connection of the AC adapter 105. Data indicating connection of the AC adapter 105 is outputted onto the system bus 19 via the PS-IF 101. The CPU 10 receives the connection data of the AC adapter 105 when the BIOS (e.g., an initial program loader (IPL)) stored in the ROM 14 is executed, and sets the "H"-level mode control data CD in the register 17.

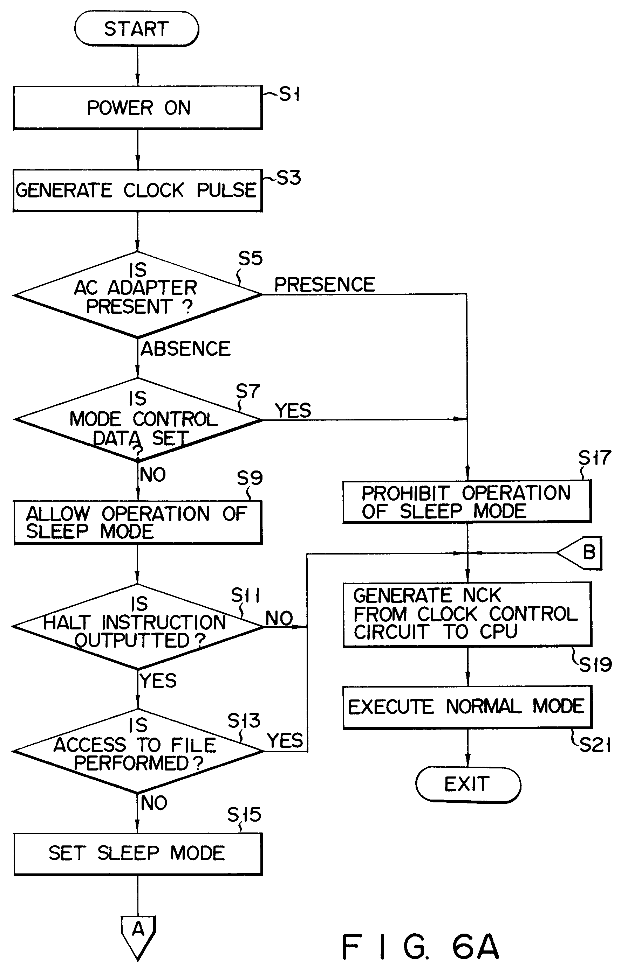

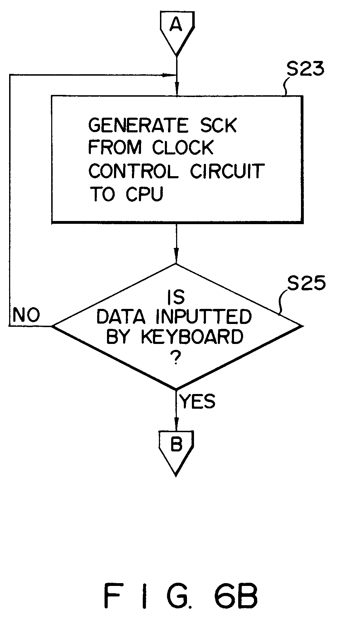

The operation of this embodiment will be described below with reference to the flow charts shown in Figs. 6A and 6B.

When the power supply of the battery in the power supply 103 is set ON, the clock generator 40 in the clock control circuit 18 is activated, and generates the clock pulses NCK1, NCK2, and SCK (steps S1 and S3). The first clock switching circuit 41 selects the clock pulse NCK1 or NCK2 in accordance with the clock switch signal CS outputted from the KBC 12, and outputs the selected pulse as a normal-mode clock pulse. When the predetermined conditions for setting the sleep mode are not satisfied, the sleep mode controller 16 outputs the "L"-level control signal SS to the clock control circuit 18. In other words, the second clock switching circuit 42 of the clock control circuit supplies the clock pulse NCK as the clock CK to the CPU in a normal mode. In response to the clock pulse NCK (NCK1 or NCK2), the CPU 10 performs normal high-speed data processing (normal mode).

The CPU 10 checks in step S5 if the AC adapter 105 is connected. If the CPU 10 determines in step S5 that the AC adapter 105 is connected, the flow advances to step S17. On the other hand, if it is determined in step S5 that the AC adapter 105 is not connected, the CPU 10 checks in step S7 if the "H"-level mode control data CD indicating that the control operation of the sleep mode controller 16 is to be prohibited is set in the control register 17. If YES in step S7, the CPU 10 advances the flow to step S17. On the other hand, if NO in step S7, the CPU 10 enables the sleep mode in step S9. More specifically, the CPU 10 executes the BIOS stored in the ROM 14 to detect a state wherein no key input is made from the keyboard 11 for a predetermined period of time. More specifically, the CPU 10 outputs a HALT instruction when input data from the KBC 12 is not stored in the key buffer of the memory 13 for a predetermined period of time. In other words, if no input data is stored in the key buffer, the logic circuit 100 (Fig. 3) outputs an "H"-level HALT instruction to the controller 16. If there is no file access for the I/O device 15 as an external device via the system bus 19 for a predetermined period of time, "L"-level signals BR and BP are outputted to the controller 16 (NO in step S13). When these conditions are satisfied (YES in step S11 and NO in step S13), the controller 16 outputs an "H"-level control signal SS to the clock control circuit 18. Upon reception of the "H"-level control signal SS, the second clock switching circuit 42 of the clock control circuit 18 supplies the low-frequency clock pulse SCK as the clock CK to the CPU 10. As a result, the mode of the CPU 10 is switched from the normal mode, i.e., a high-speed mode to the sleep mode, and the CPU 10 performs low-speed data processing in accordance with this clock pulse (steps S15 and S23). The sleep mode is released when a signal IR is generated in response to a data input from the keyboard 11 or when file access is made.

When the AC adapter 105 is connected (YES in step S5), or when the mode control data CD at logic level "H" for prohibiting the control operation of the sleep mode controller 16 is inputted from the keyboard 11, the data CD is set in the control register 17 (YES in step S7). As shown in Fig. 2, since the "L"-level signal is supplied from the control register 17 to the first input terminal of the AND gate 20a, setting of the sleep mode is prohibited. Therefore, even when the above-mentioned conditions are satisfied (YES in step S11 and NO in step S13), the sleep mode operation is disabled (step S17). More specifically, the second clock switching circuit 42 of the clock control circuit 18 supplies the clock NCK as the clock CK to the CPU 10 in response to the input "L"-level control signal SS. The CPU 10 executes normal high-speed data processing (normal mode) in response to the clock pulse NCK (step S19 and S21).

According to the present invention, when the power supply of the computer system is turned on, the initial program loader determines whether or not the AC adapter is connected, and if the AC adapter is connected, the clock control circuit prohibits supply of the low-frequency clock pulse to the CPU 10. As a result, the high-speed operation of the CPU can be maintained.

In the above embodiment, data set by a user in the setup menu or the pop-up menu and indicating whether the sleep mode is enabled or disabled is set in the register 17. However, the memory 13 may comprise a battery backup RAM, and the data may be stored in the memory 13.

In the above embodiment, whether or not the AC adapter is connected or whether or not the computer receives a power supply from an expansion unit for expanding a function of the personal computer is determined when the power supply is turned on. However, execution of the sleep mode may be disabled when the AC adapter is connected or when the computer receives a power supply from the expansion unit in a state wherein the personal computer is driven by the battery.

**Claims**

1. A computer system having a sleep mode function, characterized by comprising:

   processor means (10) for performing various data processing operations;

   clock control means (18) for selecting one of a first clock pulse at a predetermined high frequency required in a normal mode of said processor means, and a second clock pulse at a predetermined low frequency required in a sleep mode of said processor means, and supplying the selected clock pulse to said processor means;

   discrimination means (14) for discriminating whether or not said computer system receives an external power supply; and

   sleep operation control means (16) for, when said discrimination means discriminates that said computer system receives an external power supply, prohibiting said clock control means to supply the second clock pulse to said processor means.

2. A system according to claim 1, characterized in that said discrimination means includes means for discriminating whether or not an AC adapter is connected to said system to check whether or not a power is externally supplied.

3. A system according to claim 1, characterized in that said discrimination means includes means for discriminating whether or not said computer system receives a power supply from an expansion unit for expanding a function of said computer system which is releasably connected to said system.

4. A system according to claim 1, characterized in that said discrimination means includes initial program loader means for, when a power is supplied to said computer system, discriminating whether or not said computer system receives an external power supply.

5. A system according to claim 1, characterized in that said sleep operation control means comprises memory means for storing mode control data indicating that the sleep mode operation is prohibited.

6. A system according to claim 5, characterized in that said memory means comprises a register.

7. A system according to claim 5, characterized in that said memory means comprises a battery-backup random access memory (RAM).

8. A computer system including a main body having a battery and an external terminal for receiving an external power source, comprising:

a central processing unit (CPU) (10) performing data processing operations;

a clock control circuit (18) selecting one of a high clock pulse for operating said CPU at a high speed and a low clock pulse for operating said CPU at a low speed, the clock control circuit supplying the selected clock pulse to said CPU;

determination means (14) for determinating whether or not the main body receives the external power source through the external terminal; and

a sleep mode controller (16) instructing said clock control circuit to supply the high clock pulse to said CPU when said determination means determinates that the main body receives the external power source through the external terminal.

F I G. 1

EP 0 474 963 A2

F I G. 2

EP 0 474 963 A2

F I G. 3

EP 0 474 963 A2

FROM
KBC 12

CLOCK SWITCHING CIRCUIT

41

41a

CS

NCK1

41d

NCK

40

41c

CLOCK
GENERATOR

41b

32 MHZ

16 MHZ    NCK2

CLOCK SWITCHING CIRCUIT

42a

4 MHZ

CK

TO CPU 10

42d

42c

SCK

FROM
SLEEP MODE   SS
CONTROLLER 16

42

42b

F I G. 4

EP 0 474 963 A2

F I G. 5

EP 0 474 963 A2

F I G. 6A

F I G. 6B